# EUROPEAN PATENT SPECIFICATION

(11) **EP 2 043 401 B1**
(45) Date of publication and mention of the grant of the patent: **28.02.2018**
(21) Application number: 08165271.1
(22) Date of filing: 26.09.2008
(51) Int. Cl.: H04W 52/04, H04W 52/52, H04W 52/14

(54) **METHOD AND APPARATUS FOR MULTI-SLOT POWER CONTROL OF WIRELESS TRANSMISSION**
VERFAHREN UND VORRICHTUNG ZUM MULTI-SLOT-LEISTUNGSSTEUERUNG FÜR DIE DRAHTLOSE ÜBERTRAGUNG
PROCÉDÉ ET APPAREIL DE COMMANDE DE PUISSANCE MULTI-FENTE POUR TRANSMISSION SANS FIL

(30) Priority: 26.09.2007 US 904109
(43) Date of publication of application: 01.04.2009
(73) Proprietor: MediaTek Inc., Hsin-Chu 300, Taiwan (TW)
(72) Inventor: Yan, Aiguo, North Andover, MA 01845 (US); Strange, Jonathan Richard, Reigate, RH2 9LA (GB); Tenbroek, Bernard, West Malling, ME19 4PE (GB); Mathew, Deepak, Wilmington, MA 01887 (US); Ma, Liang, 201100 Shanghai (CN)
(74) Representative: Hoefer & Partner Patentanwälte mbB

(56) References cited:
- EP-A1- 1 094 618
- WO-A1-90/06018
- WO-A1-97/23062
- WO-A1-2006/127950

## Description

### Field of the Invention

This invention relates to wireless communication systems and, more particularly, to methods and apparatus for individually controlling the transmitted power level of each signal burst in wireless systems. The invention is particularly useful in TDSCDMA wireless systems, but is not limited to TDSCDMA systems. A method and apparatus for individually controlling power of signal bursts are known from WO 2006/127950 A1.

### Background of the Invention

TDSCDMA (Time Division Synchronous Code Division Multiple Access) is one of the third generation wireless communications standards. Different from WCDMA and CDMA 2000, which adopt a frequency division multiplex, TDSCDMA is designed for time division duplex/multiple access (TDD/TDMA) Operation with synchronous CDMA technology.

The TDSCDMA system uses time domain duplexing in combination with multiple access techniques to support both symmetrical and asymmetrical traffic. The variable allocation Of time slots for uplink or downlink traffic allows TDSCDMA to meet asymmetric traffic requirements and to support a variety Of users. In TDSCDMA systems, multiple access techniques employ both unique codes and time slots to separate the users in a given cell. The TDSCDMA standard defines a frame structure with three layers: the radio frame, the subframe and the time slot. The radio frame is 10 milliseconds. The subframe is 5 milliseconds and is divided into seven time slots. A time slot has four parts: a midamble, two data fields on each side of the midamble and a guard period. The receiver uses the midamble to perform channel estimation.

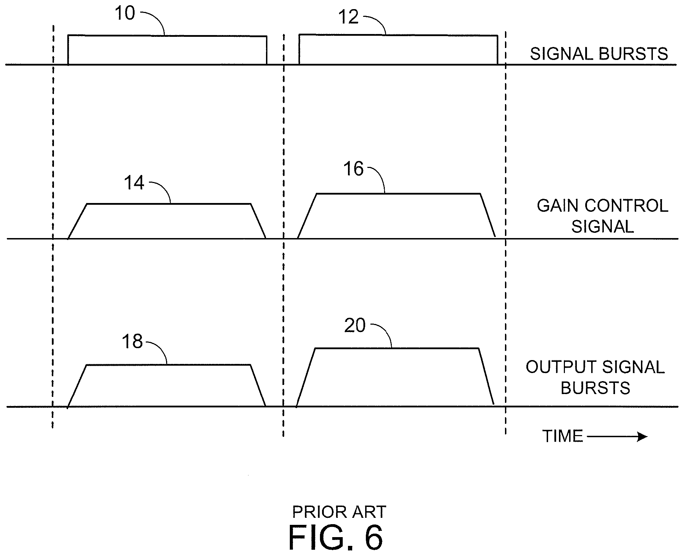

High data rate services in TDSCDMA systems require that user equipment (UE) be capable of transmitting multiple consecutive time slots per subframe. Each time slot may require a different transmission power level due to different quality of service (QoS), spreading factors, number Of physical channels, etc. However, abrupt changes in transmitted power level can produce spurious outputs and distortion of the signal wave-form. Prior art systems such as GSM/EDGE wireless systems have used an approach where a gain control signal is ramped on and ramped off during a signal burst. As shown in Fig. 6, signal bursts 10 and 12 are controlled by gain control signals 14 and 16, respectively. The signal bursts have relatively fast rise and fall times, and the gain control signals for each signal burst are ramped on and ramped off during the signal bursts.
Output signal bursts 18 and 20 are ramped as a result of the ramped gain control signal.
This approach adds complexity and is not satisfactory in some applications.

Accordingly, there is a need for improved methods and apparatus for wireless uplink transmission power control.

### Summary of the Invention

A method for controlling transmitted power in a wireless system according to the invention is defined in claim 1 and an apparatus for controlling transmitted power in a wireless system according to the invention is defined in claim 15. The dependent claims define preferred embodiments thereof.

### Brief Description of the Drawings

For a better understanding of the present invention, reference is made to the accompanying drawings, which are incorporated herein by reference and in which:
Fig. 1 is a simplified block diagram of a TDSCDMA transmitter;
Fig. 2 is a schematic representation of the TDSCDMA data (slot) structure;
Fig. 3 is a simplified block diagram of power control apparatus in accordance with an embodiment of the invention;
Fig. 4 is a timing diagram that illustrates uplink transmission power control in accordance with an embodiment of the invention;
Fig. 5 is a simplified block diagram of a portion of a TDSCDMA transmitter, illustrating possible locations for transmission power control; and
Fig. 6 is a timing diagram that illustrates transmission power control in accordance with the prior art.

### Detailed Description

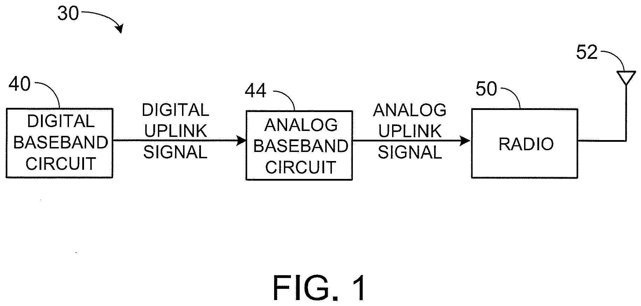

A simplified block diagram of an uplink transmitter 30 for a TDSCDMA wireless device is shown in Fig. 1. A digital baseband (DBB) circuit 40 generates a digital uplink signal to be transmitted to a base station. The digital baseband circuit 40 may include a control processor such as a programmable digital signal processor (DSP). The DSP may include a core processor, a memory, a DMA controller and various interface circuits. The digital baseband circuit 40 may also include one or more coprocessors. As discussed below, digital baseband circuit 40 generates a digital uplink signal to be transmitted, in the form of signal bursts. The digital uplink signal is supplied to an analog baseband (ABB) circuit 44, which processes the digital uplink signal in the analog domain and supplies an analog uplink signal to a radio 50. The analog uplink signal is transmitted by radio 50 via an antenna 52.

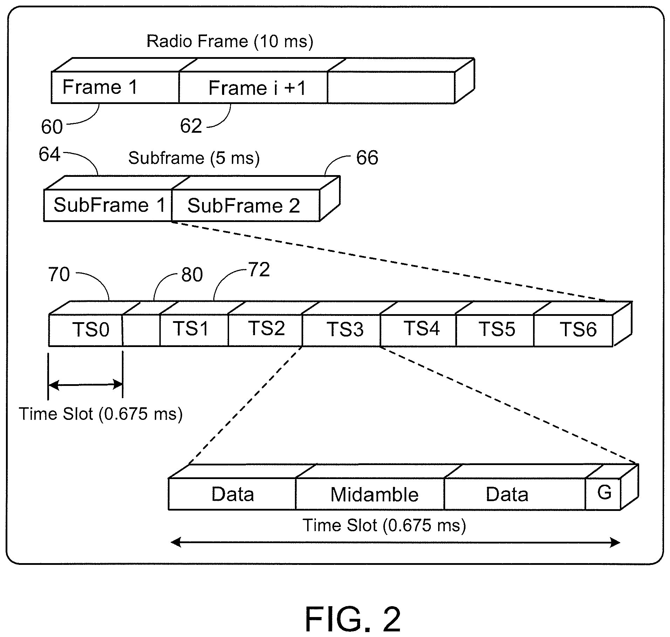

A schematic representation of the TDSCDMA data structure is shown in Fig. 2. Data is transmitted as a series of radio frames 60, 62, etc., each having a duration of 10 milliseconds. Each radio frame is divided into two subframes 64 and 66, each having a duration of 5 milliseconds. Each subframe is made up of seven time slots 70, 72, etc., each having a duration of 0.675 millisecond, and a special time interval 80 between time slots TS0 and TS1. Each time slot includes four parts, a midamble with 144 chips duration, two data fields with 352 chips duration before and after the midamble, followed by a guard period of 16 chips. The midamble contains known data and is used by the receiver to perform channel estimation.

The seven time slots in each subframe may be divided between uplink and downlink traffic, according to the traffic in each direction. According to the TDSCDMA protocol, first time slot TS0 is always a downlink time slot, second time slot TS1 is always an uplink time slot, and the remaining five time slots TS2-TS6 can be used for uplink or downlink traffic, with the restriction that the subframe cannot include more than two transitions between uplink and downlink time slots. The first transition is in the special time interval 80.

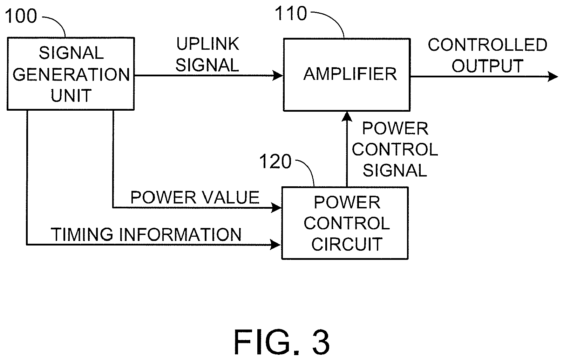

A simplified block diagram of power control apparatus in accordance with an embodiment of the invention is shown in Fig. 3. A signal generation unit 100 generates an uplink signal for transmission to a base station. The uplink signal includes a series of signal bursts, which may be time slots of a TDSCDMA subframe, as shown in Fig. 2 and described above. However, other communication protocols may be utilized within the scope of the invention. The signal generation unit 100 may be incorporated into digital baseband circuit 40, analog baseband circuit 44, or both, shown in Fig. 1 and described above. The signal bursts are processed by an amplifier 110 to provide a controlled output. The amplifier 110 may be incorporated into analog baseband circuit 44 or radio 50 shown in Fig. 1. The controlled output may be supplied to antenna 52 for transmission or may undergo further processing before transmission.

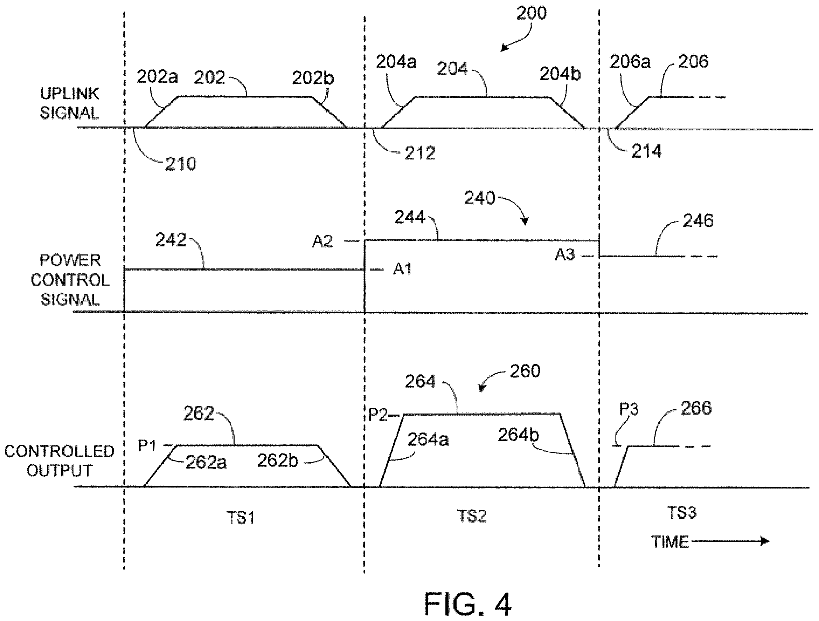

A power control circuit 120 supplies a power control signal to amplifier 110. The power control signal is based on a power value and timing information received from signal generation unit 100. The power control signal may be a gain control signal for amplifier 110. The power control circuit 120 may be incorporated into digital baseband circuit 40 or analog baseband circuit 44. The magnitude of the power control signal is based on the power value received from the signal generation unit 100, and the timing of the power control signal is based on the timing information received from signal generation unit 100. Details of the power control signal are described below in connection with Fig. 4.

Several consecutive uplink time slots TS1, TS2 and TS3 of a TDSCDMA subframe are shown in Fig. 4. An uplink signal 200 includes a signal burst 202 during time slot TS1, a signal burst 204 during next time slot TS2, and a signal burst 206 during next time slot TS3. Each signal burst contains information to be transmitted, such as data or voice signals. Signal bursts 202, 204 and 206 may be generated by signal generation unit 100 shown in Fig. 3. Signal burst 202 includes a ramp-up portion 202a and a ramp-down portion 202b, and signal burst 204 includes a ramp-up portion 204a and a ramp-down portion 204b. The ramp-up portions 202a and 204a and the ramp-down portions 202b and 204b are characteristic of TDSCDMA signal generation.

The signal bursts are generated in a manner to produce a time interval between successive signal bursts. Thus, a time interval 210 precedes signal burst 202, a time interval 212 precedes signal burst 204, and a time interval 214 precedes signal burst 206. During time intervals 210 and 212, no signal is generated or transmitted. The time intervals 210, 212 and 214 occur at the boundaries between time slots of the TDSCDMA subframe and may have a duration of only a few chips.

A power control signal 240 shown in Fig. 4 is used to control the power level of the uplink signal. Power control signal 240 includes a segment 242 in time slot TS1, a segment 244 in time slot TS2, and a segment 246 in time slot 206. As shown, segment 242 has a power value A1, which corresponds to a first power level, segment 244 has a power value A2, which corresponds to a second power level, and segment 246 has a power value A3, which corresponds to a third power level. Thus, the power level of each of the signal bursts in the subframe is individually controlled by the power control signal. As also shown in Fig. 4, segment 242 of power control signal 240 having power value A1 is asserted during time interval 210 preceding signal burst 202; segment 244 of power control signal 240 having power value A2 is asserted during time interval 212 preceding signal burst 204; and segment 246 of power control signal 240 having power value A3 is asserted during time interval 214 preceding signal burst 206. In particular, a new power value of the power control signal 240 is asserted during a transition time between time slots of the subframe when the transmitted power is at or near zero. In some embodiments, the power control signal is asserted when the transmitted signal is at least 20dB less than the nominal power. In operation, the new power value may differ from the power value of the previous time slot or may be the same as the power value of the previous time slot. Furthermore, the power control signal may have a zero power value or a "don't care" condition in downlink time slots.

The power control signal 240 is generated by power control circuit 120 shown in Fig. 3 and responds to power values and timing information provided by signal generation unit 100. In particular, signal generation unit 100 may specify power values A1, A2 and A3 of segments 242, 244 and 246, respectively. The timing information provided by signal generation unit 100 defines the time intervals between signal bursts when the new power value of the power control signal 240 may be asserted. As shown, segments 242, 244 and 246 of power control signal 240 remain constant during respective time slots TS1 and TS2, with no ramping of the power control signal.

A controlled output 260 generated by amplifier 110 (Fig. 3) is shown in Fig. 4. Controlled output 260 includes an output signal burst 262 during time slot TS1, an output signal burst 264 during time slot TS2, and an output signal burst 266 during slot TS3. Output signal burst 262 has a power level P1, which corresponds to power value A1, output signal burst 264 has a power level P2, which corresponds to power value A2, and output signal burst 266 has a power level P3, which corresponds to power value A3. As further shown in Fig. 4, output signal burst 262 includes a ramp-up portion 262a and a ramp-down portion 262b, and output signal burst 264 includes a ramp-up portion 264a and a ramp-down portion 264b. The ramp-up and ramp-down portions of the output signal bursts correspond to the respective ramp-up and ramp-down portions of signal bursts 202 and 204, since power control signal 240 is not ramped. Because the controlled output 260 includes ramp-up portions and ramp-down portions, without abrupt changes in power level, spurious signal generation is limited. In addition, since a constant power control signal is maintained during each time slot, signal distortion is limited.

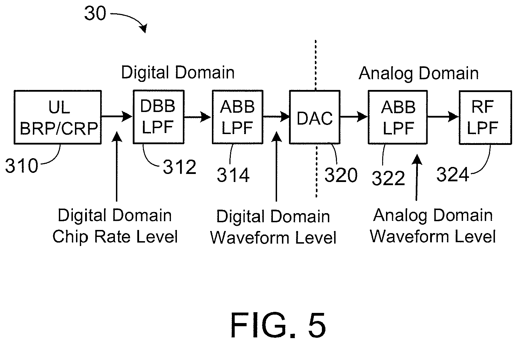

In the embodiment of Fig. 3, the power level of each signal burst in an uplink signal is controlled individually by applying a power control signal to an amplifier in the form of a gain control signal. In other embodiments, the power level can be controlled at other points in the uplink transmitter. A schematic representation of uplink transmitter 30 is shown in Fig. 5. An uplink bit rate processor and chip rate processor 310 supplies signal bursts through a digital baseband low pass filter 312 and an analog baseband low pass filter 314 to a digital-to-analog converter 320. The digital-to-analog converter 320 converts the digital uplink signal to an analog waveform and thereby serves as an interface between the digital domain and the analog domain. The output of digital-to-analog converter 320 is supplied through an analog baseband low pass filter 322 and an RF low pass filter 324 for transmission. Different locations for controlling the power level of transmitted signal bursts are illustrated schematically and include the analog domain waveform level, the digital domain waveform level and the digital domain chip rate level. In each case, a new power value of the power control signal is asserted during the time interval preceding each signal burst when the transmitted power is at or near zero.

In the embodiments described above, new power values of the power control signal are asserted without ramping of the power control signal. In other embodiments, the power control signal can employ ramping. However, in each case, the new power value of the power control signal is asserted during the time interval preceding each signal burst when the transmitted power is at or near zero.

In the embodiments described above, the power level of each signal burst in an uplink signal is controlled individually. However, the invention is not limited to uplink signals. In other embodiments, the power level of each signal burst in a downlink signal, transmitted from a base station to a wireless device, is controlled individually.

Having thus described several aspects of at least one embodiment of this invention, it is to be appreciated various alterations, modifications, and improvements will readily occur to those skilled in the art. Such alterations, modifications, and improvements are intended to be part of this disclosure, and are intended to be within the scope of the invention. Accordingly, the foregoing description and drawings are by way of example only.

## Claims

1. A method for controlling transmitted power in a wireless system, comprising:
generating information to be transmitted as a series of signal bursts (202, 204, 206) during time slots (TS1, TS2, TS3), with a time interval (210, 212, 214) between successive signal bursts, wherein each signal burst includes a ramp-up portion (202a, 204a, 206a) and a ramp-down portion (202b, 204b), and the time intervals (210, 212, 214) occur at boundaries between the time slots (TS1, TS2, TS3);
controlling individually a power level of each of said signal bursts with a power control signal (240) to provide output signal bursts (262, 264, 266) to be transmitted; and
asserting a new power value of the power control signal (240) during the time interval preceding each signal burst, wherein the power control signal (240) remains constant during the respective time slots, and the power level of each of said signal bursts (202, 204, 206) is controlled with no ramping of the power control signal (240).

2. A method as defined in claim 1, wherein the new power value of the power control signal is asserted when the transmitted power is at or near zero.

3. A method as defined in claim 1, wherein the wireless system comprises a TDSCDMA wireless system.

4. A method as defined in claim 3, wherein the signal bursts comprise uplink signal bursts transmitted from a mobile wireless station to a base station.

5. A method as defined in claim 1, wherein controlling the power level of each of said signal bursts comprises applying a gain control signal to a power amplifier that amplifies the signal bursts.

6. A method as defined in claim 1, wherein generating information further comprises providing a power value that corresponds to each of said signal bursts and wherein the power control signal is responsive to the power value.

7. A method as defined in claim 6, wherein generating information further comprises providing timing information that corresponds to each of said signal bursts and wherein the power control signal is responsive to the timing information.

8. A method as defined in claim 1, wherein controlling the power level of each of said signal bursts comprises controlling the power level in an analog domain of the wireless system.

9. A method as defined in claim 1, wherein controlling the power level of each of said signal bursts comprises controlling the power level in a digital domain of the wireless system.

10. A method as defined in claim 1, wherein the new power value of the power control signal is asserted during the time interval between time slots of a TDSCDMA subframe.

11. A method as defined in claim 1, wherein the new power value of the power control signal is asserted between subframes of a TDSCDMA frame.

12. A method as defined in claim 1, wherein the new power value of the power control signal is asserted between TDSCDMA frames.

13. A method as defined in claim 1, wherein the power control signal is asserted when the transmitted signal is at least 20dB less than the nominal power.

14. A method as defined in claim 1, wherein asserting a new power value of the power control signal comprises changing the power control signal from a first power value to a second power value during the time interval preceding each signal burst.

15. Apparatus for controlling transmitted power in a wireless system, comprising:
a signal generation unit (100) configured to generate a series of signal bursts (202, 204, 206) during time slots (TS1, TS2, TS3), with a time interval (210, 212, 214) between successive signal bursts, wherein each signal burst includes a ramp-up portion (202a, 204a, 206a) and a ramp-down portion (202b, 204b), and the time intervals (210, 212, 214) occur at boundaries between time slots (TS1, TS2, TS3);
an amplifier (110) configured to control individually a power level of each of said signal bursts (202, 204, 206) in response to a power control signal (240) to provide output signal bursts (262, 264, 266) to be transmitted; and
a power control circuit (120) configured to generate the power control signal (240) in response to a power value and timing information that correspond to each of the signal bursts, a new power value of the power control signal (240) being asserted during the time interval (212) preceding each signal burst (202, 204, 206), wherein the power control signal (240) remains constant during the respective time slots, and the power level of each of said signal bursts (202, 204, 206) is controlled with no ramping of the power control signal (240).

## Patentansprüche

1. Verfahren zum Steuern einer übertragenen Leistung in einem drahtlosen System, aufweisend:
Generieren von zu übertragenden Informationen als eine Serie von Signalfolgen (202, 204, 206) während Zeitfenstern (TS1, TS2, TS3) mit einem Zeitabstand (210, 212, 214) zwischen aufeinanderfolgenden Signalfolgen, wobei jede Signalfolge einen Anlaufabschnitt (202a, 204a, 206a) und einen Auslaufabschnitt (202b, 204b) aufweist, und die Zeitabstände (210, 212, 214) an Grenzen zwischen den Zeitfenstern (TS1, TS2, TS3) auftreten;
individuelles Steuern eines Leistungspegels jeder der Signalfolgen mit einem Leistungssteuersignal (240), um zu übertragende Ausgangssignalfolgen (262, 264, 266) bereitzustellen; und
Festlegen eines neuen Leistungswerts des Leistungssteuersignals (240) während des Zeitabstands, der jeder Signalfolge vorausgeht,
wobei das Leistungssteuersignal (240) während der jeweiligen Zeitfenster konstant bleibt, und der Leistungspegel jeder der Signalfolgen (202, 204, 206) ohne ein Anlaufen oder Auslaufen des Leistungssteuersignals (240) gesteuert wird.

2. Verfahren gemäß Anspruch 1, wobei der neue Leistungswert des Leistungssteuersignals festgelegt wird, wenn die übertragene Leistung bei oder nahe an null liegt.

3. Verfahren gemäß Anspruch 1, wobei das drahtlose System ein drahtloses TDSCDMA-System einschließt.

4. Verfahren gemäß Anspruch 3, wobei die Signalfolgen Uplink-Signalfolgen aufweisen, die von einer mobilen, drahtlosen Station an eine Basisstation übertragen werden.

5. Verfahren gemäß Anspruch 1, wobei das Steuern des Leistungspegels jeder der Signalfolgen ein Anlegen eines Verstärkungssteuersignals an einen Leistungsverstärker aufweist, welcher die Signalfolgen verstärkt.

6. Verfahren gemäß Anspruch 1, wobei das Generieren von Informationen weiter ein Bereitstellen eines Leistungswerts aufweist, welcher zu jeder der Signalfolgen korrespondiert, und wobei das Leistungssteuersignal auf den Leistungswert reaktionsfähig ist.

7. Verfahren gemäß Anspruch 6, wobei das Generieren von Informationen weiter ein Bereitstellen von Zeitinformationen aufweist, welche zu jeder der Signalfolgen korrespondieren, und wobei das Leistungssteuersignal auf die Zeitinformationen reaktionsfähig ist.

8. Verfahren gemäß Anspruch 1, wobei das Steuern des Leistungspegels jeder der Signalfolgen ein Steuern des Leistungspegels in einem Analogbereich des drahtlosen Systems einschließt.

9. Verfahren gemäß Anspruch 1, wobei das Steuern des Leistungspegels jeder der Signalfolgen ein Steuern des Leistungspegels in einem Digitalbereich des drahtlosen Systems einschließt.

10. Verfahren gemäß Anspruch 1, wobei der neue Leistungswert des Leistungssteuersignals während des Zeitabstands zwischen Zeitfenstern eines TDSCDMA-Unterrahmens festgelegt wird.

11. Verfahren gemäß Anspruch 1, wobei der neue Leistungswert des Leistungssteuersignals zwischen Unterrahmen eines TDSCDMA-Rahmens festgelegt wird.

12. Verfahren gemäß Anspruch 1, wobei der neue Leistungswert des Leistungssteuersignals zwischen TDSCDMA-Rahmen festgelegt wird.

13. Verfahren gemäß Anspruch 1, wobei das Leistungssteuersignal festgelegt wird, wenn das übertragene Signal mindestens 20 dB weniger als die nominale Leistung ist.

14. Verfahren gemäß Anspruch 1, wobei ein Festlegen eines neuen Leistungswerts des Leistungssteuersignals ein Ändern des Leistungssteuersignals von einem ersten Leistungswert zu einem zweiten Leistungswert während des Zeitabstands aufweist, der jeder Signalfolge vorausgeht.

15. Vorrichtung zum Steuern einer übertragenen Leistung in einem drahtlosen System, aufweisend:
eine Signalgenerierungseinheit (100), die eingerichtet ist, eine Serie von Signalfolgen (202, 204, 206) während Zeitfenstern (TS1, TS2, TS3) mit einem Zeitabstand (210, 212, 214) zwischen aufeinanderfolgenden Signalfolgen zu generieren, wobei jede Signalfolge einen Anlaufabschnitt (202a, 204a, 206a) und einen Auslaufabschnitt (202b, 204b) aufweist, und die Zeitabstände (210, 212, 214) an Grenzen zwischen den Zeitfenstern (TS1, TS2, TS3) auftreten;
einen Verstärker (110), der eingerichtet ist, einen Leistungspegel jeder der Signalfolgen (202, 204, 206) als Reaktion auf ein Leistungssteuersignal (240) individuell zu steuern, um zu übertragende Ausgangssignalfolgen (262, 264, 266) bereitzustellen; und
eine Leistungssteuerschaltung (120), die eingerichtet ist, das Leistungssteuersignal (240) als Reaktion auf einen Leistungswert und Zeitinformationen zu generieren, die zu jeder der Signalfolgen korrespondieren, wobei ein neuer Leistungswert des Leistungssteuersignals (240) während des Zeitabstands (212) festgelegt wird, der jeder Signalfolge (202, 204, 206) vorausgeht,
wobei das Leistungssteuersignal (240) während der jeweiligen Zeitfenster konstant bleibt, und der Leistungspegel jeder der Signalfolgen (202, 204, 206) ohne ein Anlaufen oder Auslaufen des Leistungssteuersignals (240) gesteuert wird.

## Revendications

1. Procédé de commande de puissance transmise dans un système sans fil, comprenant le fait:
de générer des informations à transmettre sous forme de série de rafales de signaux (202, 204, 206) au cours de créneaux temporels (TS1, TS2, TS3), avec un intervalle de temps (210, 212, 214) entre des rafales de signaux successives, où chaque rafale de signaux comporte une partie d'accélération (202a, 204a, 206a) et une partie de décélération (202b, 204b), et les intervalles de temps (210, 212, 214) se produisent aux limites entre les créneaux temporels (TS1, TS2, TS3);
de commander individuellement un niveau de puissance de chacune desdites rafales de signaux avec un signal de commande de puissance (240) pour fournir des rafales de signaux de sortie (262, 264, 266) à transmettre; et
d'affirmer une nouvelle valeur de puissance du signal de commande de puissance (240) au cours de l'intervalle de temps qui précède chaque rafale de signaux,
dans lequel le signal de commande de puissance (240) reste constant au cours des créneaux temporels respectifs, et le niveau de puissance de chacune desdites rafales de signaux (202, 204, 206) est commandé sans décélération/accélération du signal de commande de puissance (240).

2. Procédé selon la revendication 1, dans lequel la nouvelle valeur de puissance du signal de commande de puissance est affirmée lorsque la puissance transmise est nulle ou presque nulle.

3. Procédé selon la revendication 1, dans lequel le système sans fil comprend un système sans fil TDSCDMA.

4. Procédé selon la revendication 3, dans lequel les rafales de signaux comprennent des rafales de signaux de liaison montante transmises d'une station sans fil mobile à une station de base.

5. Procédé selon la revendication 1, dans lequel la commande du niveau de puissance de chacune desdites rafales de signaux comprend le fait d'appliquer un signal de commande de gain à un amplificateur de puissance qui amplifie les rafales de signaux.

6. Procédé selon la revendication 1, dans lequel la génération d'informations comprend en outre le fait de fournir une valeur de puissance qui correspond à chacune desdites rafales de signaux et dans lequel le signal de commande de puissance est sensible à la valeur de puissance.

7. Procédé selon la revendication 6, dans lequel la génération d'informations comprend en outre le fait de fournir des informations de synchronisation qui correspondent à chacune desdites rafales de signaux et dans lequel le signal de commande de puissance est sensible aux informations de synchronisation.

8. Procédé selon la revendication 1, dans lequel la commande du niveau de puissance de chacune desdites rafales de signaux comprend le fait de commander le niveau de puissance dans un domaine analogique du système sans fil.

9. Procédé selon la revendication 1, dans lequel la commande du niveau de puissance de chacune desdites rafales de signaux comprend le fait de commander le niveau de puissance dans un domaine numérique du système sans fil.

10. Procédé selon la revendication 1, dans lequel la nouvelle valeur de puissance du signal de commande de puissance est affirmée au cours de l'intervalle de temps entre des créneaux temporels d'une sous-trame TDSCDMA.

11. Procédé selon la revendication 1, dans lequel la nouvelle valeur de puissance du signal de commande de puissance est affirmée entre des sous-trames d'une trame TDSCDMA.

12. Procédé selon la revendication 1, dans lequel la nouvelle valeur de puissance du signal de commande de puissance est affirmée entre des trames TDSCDMA.

13. Procédé selon la revendication 1, dans lequel le signal de commande de puissance est affirmé lorsque le signal transmis est inférieur d'au moins 20 dB à la puissance nominale.

14. Procédé selon la revendication 1, dans lequel l'affirmation d'une nouvelle valeur de puissance du signal de commande de puissance comprend le fait de modifier le signal de commande de puissance d'une première valeur de puissance en une deuxième valeur de puissance au cours de l'intervalle de temps qui précède chaque rafale de signaux.

15. Appareil de commande de puissance transmise dans un système sans fil, comprenant:
une unité de génération de signaux (100) configurée pour générer une série de rafales de signaux (202, 204, 206) au cours de créneaux temporels (TS1, TS2, TS3), avec un intervalle de temps (210, 212, 214) entre des rafales de signaux successives, où chaque rafale de signaux comporte une partie d'accélération (202a, 204a, 206a) et une partie de décélération (202b, 204b), et les intervalles de temps (210, 212, 214) se produisent aux limites entre les créneaux temporels (TS1, TS2, TS3);
un amplificateur (110) configuré pour commander individuellement un niveau de puissance de chacune desdites rafales de signaux (202, 204, 206) en réponse à un signal de commande de puissance (240) pour fournir des rafales de signaux de sortie (262, 264, 266) à transmettre; et
un circuit de commande de puissance (120) configuré pour générer le signal de commande de puissance (240) en réponse à une valeur de puissance et des informations de synchronisation qui correspondent à chacune des rafales de signaux, une nouvelle valeur de puissance du signal de commande de puissance (240) étant affirmée au cours de l'intervalle de temps (212) qui précède chaque rafale de signaux (202, 204, 206),
dans lequel le signal de commande de puissance (240) reste constant au cours des créneaux temporels respectifs, et le niveau de puissance de chacune desdites rafales de signaux (202, 204, 206) est commandé sans décélération/accélération du signal de commande de puissance (240).
